# EUROPÄISCHE PATENTSCHRIFT

(11) **EP 1 073 838 B1**
(45) Veröffentlichungstag und Bekanntmachung des Hinweises auf die Patenterteilung: **06.05.2004**
(21) Anmeldenummer: 99957949.3
(22) Anmeldetag: 28.10.1999
(51) Int. Cl.: F02M 61/16, F02M 61/18

(54) **BRENNSTOFFEINSPRITZVENTIL**
FUEL INJECTION VALVE
SOUPAPE D'INJECTION DE CARBURANT

(30) Priorität: 24.02.1999 DE 19907899
(43) Veröffentlichungstag der Anmeldung: 07.02.2001
(73) Patentinhaber: ROBERT BOSCH GMBH, 70442 Stuttgart (DE)
(72) Erfinder: MUELLER, Martin, D-71696 Moeglingen (DE); HOANG, Anh, Tuan, D-71732 Tamm (DE); DALLMANN, Frank, D-70806 Kornwestheim (DE); POHLMANN, Jens, D-71701 Schieberdingen (DE); BUEHNER, Martin, D-71522 Backnang (DE); LAND, Peter, D-96175 Pettstadt (DE); KEIM, Norbert, D-74369 Löchgau (DE)
(86) Internationale Anmeldenummer: PCT/DE1999/003461
(87) Internationale Veröffentlichungsnummer: WO 2000/050766

(56) Entgegenhaltungen:
- EP-A- 0 909 920
- DE-A- 2 232 686
- DE-A- 2 841 967
- DE-A- 19 757 299
- DE-C- 4 035 317
- PATENT ABSTRACTS OF JAPAN vol. 1995, no. 08, 29. September 1995 (1995-09-29) & JP 07 119584 A (TOYOTA MOTOR CORP), 9. Mai 1995 (1995-05-09)

## Beschreibung

### Stand der Technik

Die Erfindung geht aus von einem Brennstoffeinspritzventil nach der Gattung des Anspruchs 1, des Anspruchs 4 bzw. des Anspruchs 7.

Aus der DE 197 57 299 A1 ist bereits ein Brennstoffeinspritzventil bekannt, bei dem stromabwärts eines Ventilsitzes eine Kraftstoffeinspritzkammer angeordnet ist. Mit dem Ventilsitz wirkt zum Öffnen und Schließen des Ventils eine axial bewegliche Ventilnadel zusammen, die entsprechend der Kontur des Ventilsitzes einen konisch verlaufenden Schließabschnitt besitzt. Stromaufwärts des Ventilsitzes ist am äußeren Umfang der Ventilnadel ein schräg verlaufender Drallkanal vorgesehen. Der Drallkanal mündet in eine ringförmige Wirbelkammer, die zwischen der Ventilnadel und einem äußeren Ventilgehäuse gebildet ist. Aus dieser Wirbelkammer wird der Kraftstoff zum Ventilsitz geführt. Aus der dem Ventilsitz nachfolgenden Kraftstoffeinspritzkammer strömt der Kraftstoff in eine Austrittsöffnung, die geringfügig versetzt zum Mittelpunkt der Bodenoberfläche der Kraftstoffeinspritzkammer beginnt und schräg geneigt zur Ventillängsachse stromabwärts verläuft.

### Vorteile der Erfindung

Das erfindungsgemäße Brennstoffeinspritzventil mit den kennzeichnenden Merkmalen des Anspruchs 1, des Anspruchs 4 bzw. des Anspruchs 7 hat den Vorteil, dass auf besonders einfache Art und Weise kostengünstig eine Kompensation der bei einer gewünschten Schrägstellung einer Austrittsöffnung entstehenden Ungleichverteilung von Brennstoff im abzuspritzenden Spray hin zu einer Gleichverteilung eines schräg abgespritzten Sprays erreicht wird. Mit dem erfindungsgemäßen Brennstoffeinspritzventil wird eine sehr gute Zerstäubung und eine sehr exakte Abspritzung des Brennstoffs z.B. direkt in einen Zylinder einer Brennkraftmaschine erreicht. Es wird eine besonders gleichmäßige Front des abgespritzten Sprays erzielt. Außerdem lassen sich Einzelsträhnen im Spray mit großer Penetrationstiefe und -geschwindigkeit vermeiden.

Durch die in den Unteransprüchen aufgeführten Maßnahmen sind vorteilhafte Weiterbildungen und Verbesserungen des im Anspruch 1, des im Anspruch 4 bzw. des im Anspruch 7 angegebenen Brennstoffeinspritzventils möglich.

Von Vorteil ist es, den oben erwähnten Ausgleich der Ungleichmäßigkeit des Sprays mit einer Austrittsöffnung zu erreichen, deren Mittelpunkt der Eintrittsebene auf der Ventillängsachse liegt, die also einen mittigen Eintritt hat. Auf diese Weise können bei vorgegebenem kleinen Durchmesser des Ventilsitzes im Bereich seiner Sitzberührlinie zur Vermeidung großer hydraulischer Kräfte auf die Ventilnadel jedoch relativ große Durchmesser der Austrittsöffnung gewählt werden, die einen großen Brennstoffdurchfluss erlauben. Im Vergleich zu außermittigen Lösungen lassen sich außerdem Durchflussstreuungen besser vermeiden.

In besonders vorteilhafter Weise wird dem Ventilsitz im Ventilsitzelement drallbehafteter Brennstoff auf einem extrem kurzen Strömungsweg zugeführt. Dieser sehr kurze Strömungsweg wird auch insofern garantiert, dass die Austrittsöffnung bereits unmittelbar am Ende der Ventilsitzfläche unter Vermeidung von irgendwelchen Sammelräumen beginnt.

Das scheibenförmige Drallelement ist sehr einfach strukturiert und dadurch einfach ausformbar. Dem Drallelement kommt die Aufgabe zu, eine Drall- bzw. Drehbewegung im Brennstoff zu erzeugen. Da es sich bei dem Drallelement um ein Einzelbauteil handelt, sind bei dessen Handhabung im Herstellungsprozess keine Einschränkungen zu erwarten.

Im Vergleich zu Drallkörpern, die an einer Stirnseite Nuten oder ähnliche drallerzeugende Vertiefungen aufweisen, kann in dem Drallelement mit einfachsten Mitteln ein innerer Öffnungsbereich geschaffen werden, der sich über die gesamte axiale Dicke des Drallelements erstreckt und von einem äußeren umlaufenden Randbereich umgeben ist.

### Zeichnung

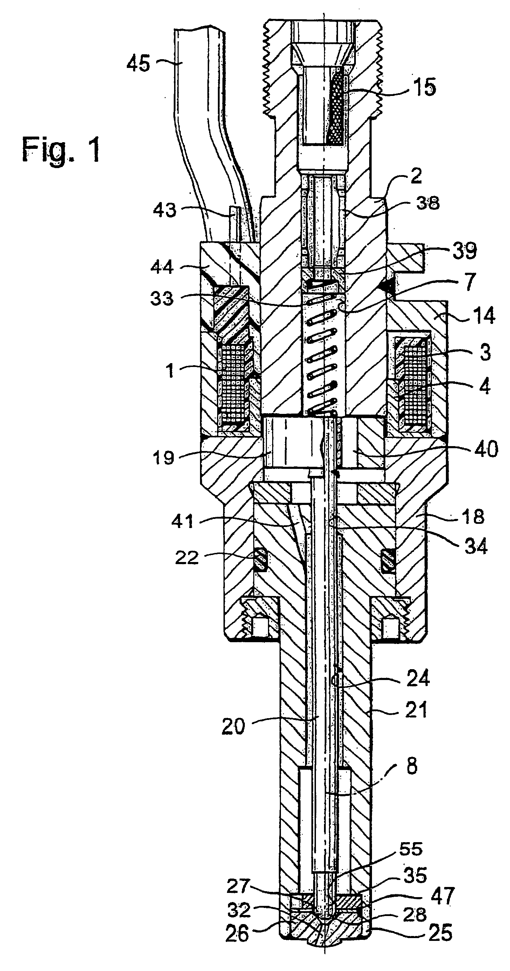

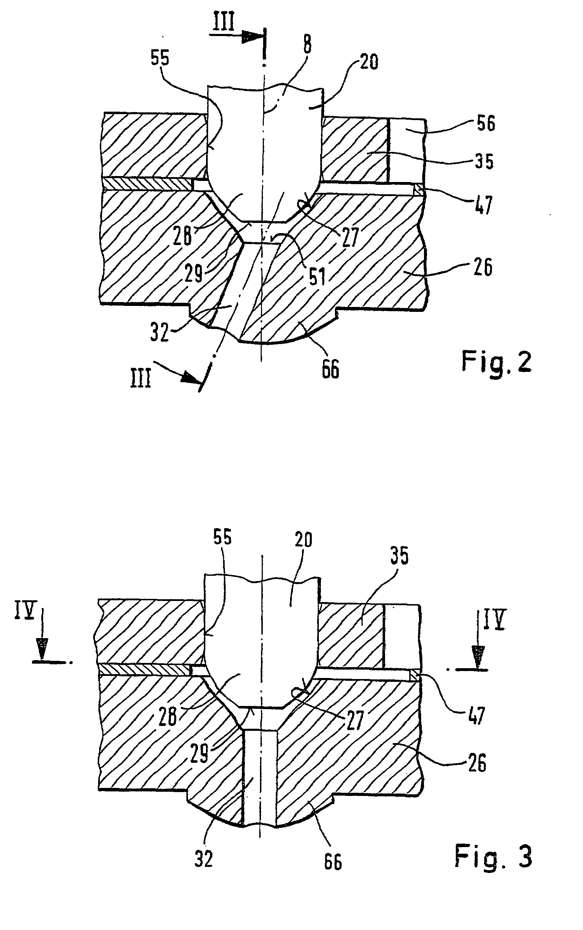

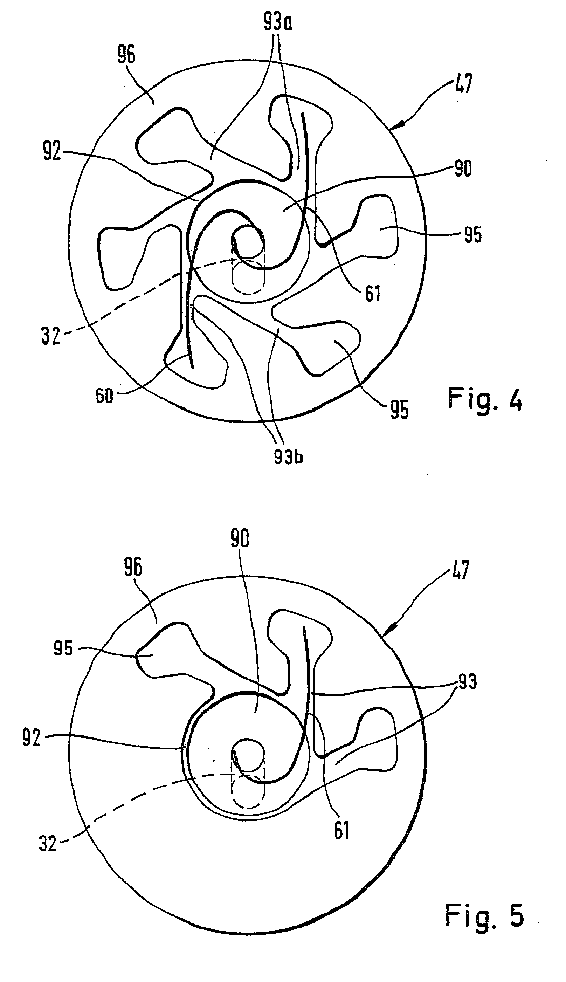

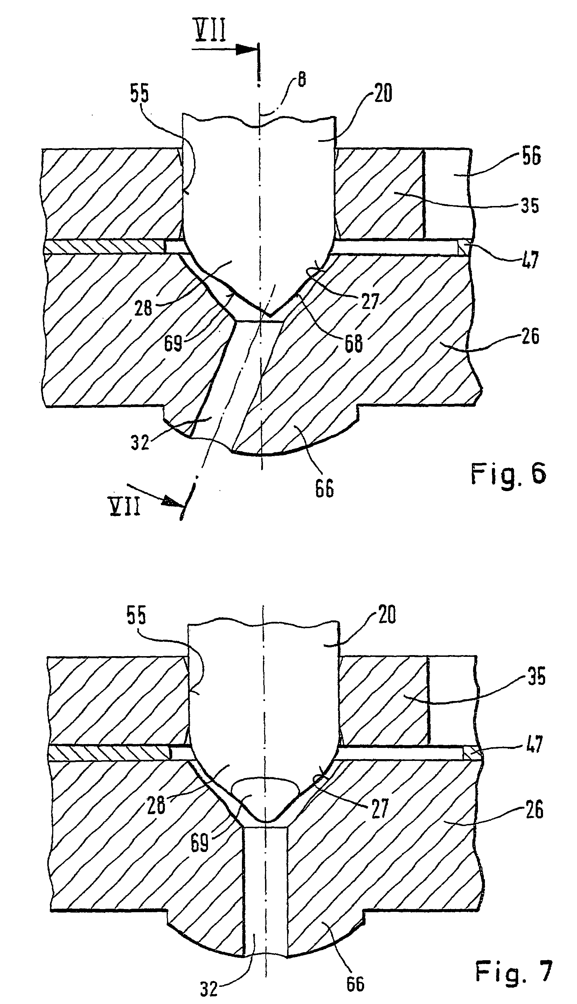

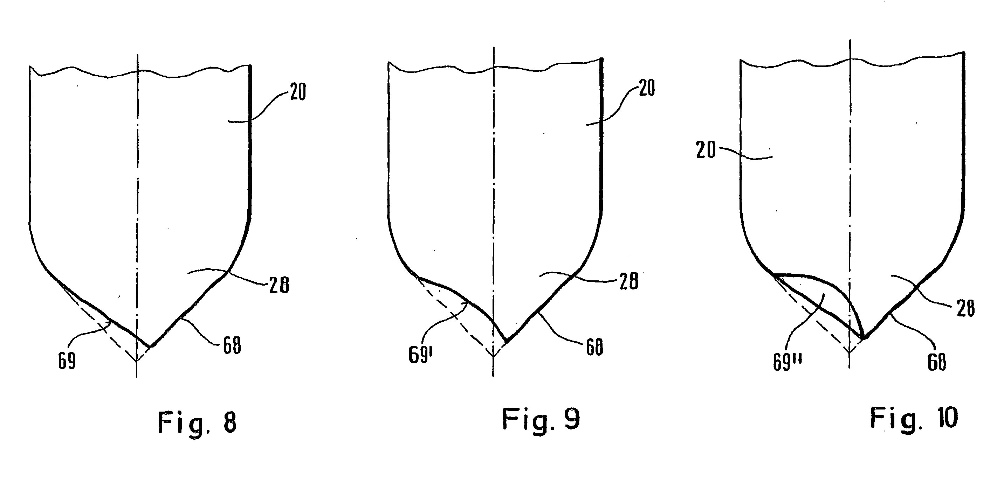

Ausführungsbeispiele der Erfindung sind in der Zeichnung vereinfacht dargestellt und in der nachfolgenden Beschreibung näher erläutert. Es zeigen Figur 1 ein Ausführungsbeispiel eines Brennstoffeinspritzventils, Figur 2 einen Schnitt durch das stromabwärtige Ventilende, Figur 3 einen Schnitt entlang der Linie III-III in Figur 2, Figur 4 einen Schnitt entlang der Linie IV-IV in Figur 3 und damit eine Draufsicht auf ein Drallelement als ein erstes erfindungsgemäßes Ausführungsbeispiel, Figur 5 ein zweites Ausführungsbeispiel in einer Darstellung analog Figur 4, Figur 6 ein drittes Ausführungsbeispiel in einer Darstellung analog Figur 2, Figur 7 einen Schnitt entlang der Linie VII-VII in Figur 6, Figur 8 die Ventilnadelspitze gemäß Figuren 6 und 7 in einem vergrößerten Maßstab, Figur 9 ein anderes Ausführungsbeispiel einer Ventilnadelspitze und Figur 10 ein weiteres Ausführungsbeispiel einer Ventilnadelspitze.

### Beschreibung der Ausführungsbeispiele

Das in der Figur 1 beispielsweise als ein Ausführungsbeispiel dargestellte elektromagnetisch betätigbare Ventil in der Form eines Einspritzventils für Brennstoffeinspritzanlagen von fremdgezündeten Brennkraftmaschinen hat einen von einer Magnetspule 1 zumindest teilweise umgebenen, als Innenpol eines Magnetkreises dienenden, rohrförmigen, weitgehend hohlzylindrischen Kern 2. Das Brennstoffeinspritzventil eignet sich besonders als Hochdruckeinspritzventil zum direkten Einspritzen von Brennstoff in einen Brennraum einer Brennkraftmaschine. Ein beispielsweise gestufter Spulenkörper 3 aus Kunststoff nimmt eine Bewicklung der Magnetspule 1 auf und ermöglicht in Verbindung mit dem Kern 2 und einem ringförmigen, nichtmagnetischen, von der Magnetspule 1 teilweise umgebenen Zwischenteil 4 mit einem L-förmigen Querschnitt einen besonders kompakten und kurzen Aufbau des Einspritzventils im Bereich der Magnetspule 1.

In dem Kern 2 ist eine durchgängige Längsöffnung 7 vorgesehen, die sich entlang einer Ventillängsachse 8 erstreckt. Der Kern 2 des Magnetkreises dient auch als Brennstoffeinlaßstutzen, wobei die Längsöffnung 7 einen Brennstoffzufuhrkanal darstellt. Mit dem Kern 2 oberhalb der Magnetspule 1 fest verbunden ist ein äußeres metallenes (z. B. ferritisches) Gehäuseteil 14, das als Außenpol bzw. äußeres Leitelement den Magnetkreis schließt und die Magnetspule 1 zumindest in Umfangsrichtung vollständig umgibt. In der Längsöffnung 7 des Kerns 2 ist zulaufseitig ein Brennstofffilter 15 vorgesehen, der für die Herausfiltrierung solcher Brennstoffbestandteile sorgt, die aufgrund ihrer Größe im Einspritzventil Verstopfungen oder Beschädigungen verursachen könnten. Der Brennstofffilter 15 ist z. B. durch Einpressen im Kern 2 fixiert.

Der Kern 2 bildet mit dem Gehäuseteil 14 das zulaufseitige Ende des Brennstoffeinspritzventils, wobei sich das obere Gehäuseteil 14 beispielsweise in axialer Richtung stromabwärts gesehen gerade noch über die Magnetspule 1 hinaus erstreckt. An das obere Gehäuseteil 14 schließt sich dicht und fest ein unteres rohrförmiges Gehäuseteil 18 an, das z. B. ein axial bewegliches Ventilteil bestehend aus einem Anker 19 und einer stangenförmigen Ventilnadel 20 bzw. einen langgestreckten Ventilsitzträger 21 umschließt bzw. aufnimmt. Die beiden Gehäuseteile 14 und 18 sind z. B. mit einer umlaufenden Schweißnaht fest miteinander verbunden.

In dem in Figur 1 dargestellten Ausführungsbeispiel sind das untere Gehäuseteil 18 und der weitgehend rohrförmige Ventilsitzträger 21 durch Verschrauben fest miteinander verbunden; Schweißen, Löten oder Bördeln stellen aber ebenso mögliche Fügeverfahren dar. Die Abdichtung zwischen dem Gehäuseteil 18 und dem Ventilsitzträger 21 erfolgt z. B. mittels eines Dichtrings 22. Der Ventilsitzträger 21 besitzt über seine gesamte axiale Ausdehnung eine innere Durchgangsöffnung 24, die konzentrisch zu der Ventillängsachse 8 verläuft.

Mit seinem unteren Ende 25, das auch zugleich den stromabwärtigen Abschluss des gesamten Brennstoffeinspritzventils darstellt, umgibt der Ventilsitzträger 21 ein in der Durchgangsöffnung 24 eingepasstes scheibenförmiges Ventilsitzelement 26 mit einer sich stromabwärts kegelstumpfförmig verjüngenden Ventilsitzfläche 27. In der Durchgangsöffnung 24 ist die z. B. stangenförmige, einen weitgehend kreisförmigen Querschnitt aufweisende Ventilnadel 20 angeordnet, die an ihrem stromabwärtigen Ende einen Ventilschließabschnitt 28 aufweist. Dieser beispielsweise kugelig oder teilweise kugelförmig bzw. abgerundet ausgebildete oder sich keglig verjüngende Ventilschließabschnitt 28 wirkt in bekannter Weise mit der im Ventilsitzelement 26 vorgesehenen Ventilsitzfläche 27 zusammen. Stromabwärts der Ventilsitzfläche 27 ist im Ventilsitzelement 26 eine Austrittsöffnung 32 für den Brennstoff eingebracht.

Die Betätigung des Einspritzventils erfolgt in bekannter Weise elektromagnetisch. Ein Piezoaktor als erregbares Betätigungselement ist jedoch ebenso denkbar. Ebenso ist eine Betätigung über einen gesteuert druckbelasteten Kolben denkbar. Zur axialen Bewegung der Ventilnadel 20 und damit zum Öffnen entgegen der Federkraft einer in der Längsöffnung 7 des Kerns 2 angeordneten Rückstellfeder 33 bzw. Schließen des Einspritzventils dient der elektromagnetische Kreis mit der Magnetspule 1, dem Kern 2, den Gehäuseteilen 14 und 18 und dem Anker 19. Der Anker 19 ist mit dem dem Ventilschließabschnitt 28 abgewandten Ende der Ventilnadel 20 z. B. durch eine Schweißnaht verbunden und auf den Kern 2 ausgerichtet. Zur Führung der Ventilnadel 20 während ihrer Axialbewegung mit dem Anker 19 entlang der Ventillängsachse 8 dient einerseits eine im Ventilsitzträger 21 am dem Anker 19 zugewandten Ende vorgesehene Führungsöffnung 34 und andererseits ein stromaufwärts des Ventilsitzelements 26 angeordnetes scheibenförmiges Führungselement 35 mit einer maßgenauen Führungsöffnung 55. Der Anker 19 ist während seiner Axialbewegung von dem Zwischenteil 4 umgeben.

Zwischen dem Führungselement 35 und dem Ventilsitzelement 26 ist ein weiteres scheibenförmiges Element, und zwar ein Drallelement 47 angeordnet, so dass alle drei Elemente 35, 47 und 26 unmittelbar aufeinanderliegen und im Ventilsitzträger 21 Aufnahme finden. Die drei scheibenförmigen Elemente 35, 47 und 26 sind beispielsweise stoffschlüssig fest miteinander verbunden.

Eine in der Längsöffnung 7 des Kerns 2 eingeschobene, eingepresste oder eingeschraubte Einstellhülse 38 dient zur Einstellung der Federvorspannung der über ein Zentrierstück 39 mit ihrer stromaufwärtigen Seite an der Einstellhülse 38 anliegenden Rückstellfeder 33, die sich mit ihrer gegenüberliegenden Seite am Anker 19 abstützt. Im Anker 19 sind ein oder mehrere bohrungsähnliche Strömungskanäle 40 vorgesehen, durch die der Brennstoff von der Längsöffnung 7 im Kern 2 aus über stromabwärts der Strömungskanäle 40 ausgebildete Verbindungskanäle 41 nahe der Führungsöffnung 34 im Ventilsitzträger 21 bis in die Durchgangsöffnung 24 gelangen kann.

Der Hub der Ventilnadel 20 wird durch die Einbaulage des Ventilsitzelements 26 vorgegeben. Eine Endstellung der Ventilnadel 20 ist bei nicht erregter Magnetspule 1 durch die Anlage des Ventilschließabschnitts 28 an der Ventilsitzfläche 27 des Ventilsitzelements 26 festgelegt, während sich die andere Endstellung der Ventilnadel 20 bei erregter Magnetspule 1 durch die Anlage des Ankers 19 an der stromabwärtigen Stirnseite des Kerns 2 ergibt. Die Oberflächen der Bauteile im letztgenannten Anschlagbereich sind beispielsweise verchromt.

Die elektrische Kontaktierung der Magnetspule 1 und damit deren Erregung erfolgt über Kontaktelemente 43, die noch außerhalb des Spulenkörpers 3 mit einer Kunststoffumspritzung 44 versehen sind. Die Kunststoffumspritzung 44 kann sich auch über weitere Bauteile (z. B. Gehäuseteile 14 und 18) des Brennstoffeinspritzventils erstrecken. Aus der Kunststoffumspritzung 44 heraus verläuft ein elektrisches Anschlusskabel 45, über das die Bestromung der Magnetspule 1 erfolgt. Die Kunststoffumspritzung 44 ragt durch das in diesem Bereich unterbrochene obere Gehäuseteil 14.

Figur 2 zeigt einen Schnitt durch das stromabwärtige Ventilende des Ventils gemäß Figur 1. Die Ventilsitzfläche 27 bildet einen Kegelabschnitt im Ventilsitzelement 26, der an seinem stromabwärtigen Ende in einem Bodenbereich 51 mit geringem Durchmesser ausläuft. Von diesem Bodenbereich 51 ausgehend erstreckt sich unmittelbar die Austrittsöffnung 32 in stromabwärtiger Richtung. Die Austrittsöffnung 32 verläuft dabei nicht parallel zur Ventillängsachse 8.

Vielmehr erstreckt sich die Austrittsöffnung 32 schräg geneigt zur Ventillängsachse 8 in stromabwärtiger Richtung von ihr weg, wobei der Mittelpunkt der Eintrittsebene der Austrittsöffnung 32 auf der Ventillängsachse 8 liegt und der Mittelpunkt der Austrittsebene der Austrittsöffnung 32 abseits der Ventillängsachse 8 liegt. Die Austrittsöffnung 32 endet beispielsweise in einem konvex ausgewölbten Abspritzbereich 66. Figur 3 zeigt einen Schnitt entlang der Linie III-III in Figur 2, der veranschaulicht, dass die Austrittsöffnung 32 mittig im Bodenbereich 51 beginnt.

Das Führungselement 35 weist eine maßgenaue innere Führungsöffnung 55 auf, durch die sich die Ventilnadel 20 während ihrer Axialbewegung hindurch bewegt. Vom äußeren Umfang her besitzt das Führungselement 35 über den Umfang verteilt mehrere Ausnehmungen 56, womit eine Brennstoffströmung am äußeren Umfang des Führungselements 35 entlang in das Drallelement 47 hinein und weiter in Richtung zur Ventilsitzfläche 27 garantiert ist.

Der Ventilschließabschnitt 28 als das stromabwärtige Ende der Ventilnadel 20 endet stromabwärts mit einer Abflachung 29, die eben ausgeführt ist und senkrecht zur Ventillängsachse 8 verläuft. Bei der Abflachung 29 handelt es sich z.B. um einen planen Flächenanschliff.

In Figur 4 ist ein Schnitt entlang der Linie IV-IV in Figur 3 und damit eine Draufsicht auf das Drallelement 47 als ein erstes erfindungsgemäßes Ausführungsbeispiel dargestellt. Das Drallelement 47 kann kostengünstig beispielsweise mittels Stanzen, Drahterodieren, Laserschneiden, Ätzen oder anderen bekannten Verfahren aus einem Blech oder durch galvanische Abscheidung hergestellt werden. In dem Drallelement 47 ist ein innerer Öffnungsbereich 90 ausgeformt, der über die gesamte axiale Dicke des Drallelements 47 verläuft. Der Öffnungsbereich 90 wird von einer inneren Drallkammer 92, durch die sich der Ventilschließabschnitt 28 der Ventilnadel 20 hindurch erstreckt, und von einer Vielzahl von in die Drallkammer 92 mündenden Drallkanälen 93a, 93b gebildet. Die Drallkanäle 93a, 93b münden tangential in die Drallkammer 92 und stehen mit ihren der Drallkammer 92 abgewandten Enden 95 nicht mit dem äußeren Umfang des Drallelements 47 in Verbindung. Vielmehr verbleibt zwischen den als Einlauftaschen ausgebildeten Enden 95 der Drallkanäle 93a, 93b und dem äußeren Umfang des Drallelements 47 ein umlaufender Randbereich 96.

Bei eingebauter Ventilnadel 20 wird die Drallkammer 92 nach innen von der Ventilnadel 20 (Ventilschließabschnitt 28) und nach außen durch die Wandung des Öffnungsbereichs 90 des Drallelements 47 begrenzt. Durch die tangentiale Einmündung der Drallkanäle 93a, 93b in die Drallkammer 92 bekommt der Brennstoff einen Drehimpuls aufgeprägt, der in der weiteren Strömung bis in die Austrittsöffnung 32 erhalten bleibt. Durch die Fliehkraft wird der Brennstoff weitgehend hohlkegelförmig abgespritzt. Die Enden 95 der Drallkanäle 93a, 93b dienen als Sammeltaschen, die großflächig ein Reservoir zum turbulenzarmen Einströmen des Brennstoffs bilden. Nach der Strömungsumlenkung tritt der Brennstoff langsam und turbulenzarm in die eigentlichen tangentialen Drallkanäle 93a, 93b ein, wodurch ein weitgehend störungsfreier Drall erzeugbar ist.

Erfindungsgemäß sind die Drallkanäle 93a, 93b ungleich über den Umfang des Drallelements 47 angeordnet, womit gemeint ist, dass die Drallkanäle 93a, 93b entweder mit unterschiedlicher Geometrie, aber weitgehend gleichmäßiger Verteilung über 360° eingebracht sind (Figur 4) oder die Drallkanäle 93 wirklich ungleichmäßig über den Umfang verteilt sind (Figur 5).

Im folgenden soll der Hintergrund solcher Ausführungen erläutert werden. Besonders für die Anwendung von Brennstoffeinspritzventilen für die sogenannte Benzindirekteinspritzung ist es wünschenswert, drallbehaftete Sprays in Hohlkegelform schräg geneigt in den Brennraum einer Brennkraftmaschine einzuspritzen. Wird die Austrittsöffnung 32 in entsprechend gewünschter Weise schräg geneigt zur Ventillängsachse 8 bei gleichmäßiger Drallanströmung eingebracht, tritt das Problem auf, dass die Brennstoffströmung in der geneigten Austrittsöffnung 32 ungleichmäßig über dem Umfang verteilt ist und in der Konsequenz ein umfangsmäßig sehr ungleichförmiges Brennstoffspray austritt. Diesem Phänomen kann in gewisser Weise begegnet werden, indem, wie aus der DE 197 57 299 A1 bekannt, die Austrittsöffnung 32 mit Versatz zur Ventillängsachse 8 eingebracht wird.

Mit den erfindungsgemäßen Lösungen soll die besondere Konturgebung zur Vermeidung des oben genannten Problems vom Ventilsitzelement 26 bzw. der Austrittsöffnung 32 losgelöst vollzogen werden und das schwierige Einbringen einer exakten schrägen und außermittigen Austrittsöffnung 32 vermieden werden.

Anhand von in Figur 4 symbolisch dargestellten Teilchenbahnen 60, 61 soll erläutert werden, wie die Lösung des Problems des ungleichmäßigen Sprays bei schräg spritzenden Ventilen durch eine besondere Konturgebung am Drallelement 47 erzielt wird. Das Drallelement 47 ist derart ausgeführt, dass die Drallkanäle 93a auf der durch die Neigung der Austrittsöffnung 32 vorgegebenen Abspritzrichtung gegenüberliegenden Seite eine größere Breite haben als die Drallkanäle 93b, die weitgehend auf der Seite der neigungsbedingten Abspritzrichtung liegen. Entsprechend muss das Drallelement 47 genau ausgerichtet zum Ventilsitzelement 26 und damit zur Neigungsrichtung der Austrittsöffnung 32 ausgerichtet sein. Aufgrund der tangentialen Einströmung tritt gerade der Brennstoff aus den schmaleren Drallkanälen 93b, wie Teilchenbahn 60 zeigt, in Abspritzrichtung in die Austrittsöffnung 32 ein. Dagegen erreicht der Brennstoff der breiteren Drallkanäle 93a die Austrittsöffnung 32 entgegen ihrer Neigungsrichtung (Teilchenbahn 61). Auf diese Weise wird das Einströmen auf der Teilchenbahn 60 zur Austrittsöffnung 32 hin behindert, durch die Neigung der Austrittsöffnung 32 aber begünstigt. Bei richtiger Abstimmung der Breiten der Drallkanäle 93a, 93b wird eine gleichmäßige Umfangsverteilung des Sprays erzielt. Es können beispielsweise jeweils drei Drallkanäle 93a und 93b vorgesehen sein. Andererseits können die Drallkanalbreiten auch so gewählt werden, dass ein definiert ungleichmäßiges Spray über den Umfang entsteht, wenn dies für ein Motorbrennverfahren gewünscht ist.

Anstelle der ungleichen Geometrie der Drallkanäle 93a, 93b auf den verschiedenen Seiten des Drallelements 47 können die Drallkanäle 93 auch ungleichmäßig über den Umfang verteilt sein, wie es Figur 5 zeigt. Bei diesem Ausführungsbeispiel sind die beispielsweise drei Drallkanäle 93 nur auf der der Neigungsrichtung der Austrittsöffnung 32 entgegengesetzten Seite über ca. 180° angeordnet. Bei richtiger Abstimmung der geometrischen Lage bzw. der Größenverhältnisse der Drallkanäle 93 kann auch mit dieser Ausführung ein sehr gleichmäßiges Spray bei Schrägabspritzung erzeugt werden. Allgemein betrachtet gibt es bei einer Ungleichverteilung von wenigstens zwei Drallkanälen 93 wenigstens zwei unterschiedliche umfängliche Abstände zwischen jeweils zwei benachbarten Drallkanälen 93. Bei dem Beispiel gemäß Figur 5 sind die Abstände zwischen dem linken und dem mittleren sowie zwischen dem mittleren und dem rechten Drallkanal 93 gleich groß (je 90°), während der Abstand zwischen dem rechten und dem linken Drallkanal 93 erheblich größer (>180°) ist.

Es soll betont werden, dass anhand der Figuren 4 und 5 nur zwei vorteilhafte Ausführungsbeispiele beschrieben wurden, aus denen sich noch keine allgemeine Gesetzmäßigkeit für die Anordnung der Drallkanäle 93, 93a, 93b ableiten lässt. Es ist also nicht grundsätzlich so, dass die breiten Drallkanäle 93a (Figur 4) der Neigungsrichtung der Austrittsöffnung 32 gegenüberliegend angeordnet bzw. dass bei einer Ungleichverteilung die Drallkanäle 93 (Figur 5) ausschließlich der Neigungsrichtung der Austrittsöffnung 32 gegenüberliegend angeordnet sind. Bei der Anordnung der Drallkanäle 93 spielen vielmehr weitere Faktoren eine Rolle, wie z.B. die Geometrie der Drallkanäle 93 oder der Durchmesser der Austrittsöffnung 32, mit denen beispielsweise der Ausbreitungswinkel des abzuspritzenden Brennstoffsprays festgelegt wird. Mit diesen geometrischen Abmessungen wird außerdem festgelegt, über welchen Winkelbereich die Strömung vom jeweiligen Drallkanal 93, 93a, 93b bis hin zum Eintritt in die Austrittsöffnung 32 strömt. Die Teilchenbahnen 60, 61 in den Figuren 4 und 5 verdeutlichen, dass in den beschriebenen Ausführungsbeispielen dieser Winkel ca. 180° beträgt. Nimmt man die Größe dieses Strömungswinkelbereichs ausgehend von der Neigungsrichtung der Austrittsöffnung 32 umfangsmäßig in entgegengesetzter Richtung zur Drallrichtung, so kommt man zu dem Bereich, der in vorteilhafter Weise die breiteren Drallkanäle 93a (Figur 4) bzw. überhaupt Drallkanäle 93 (Figur 5) aufweist. Bei den Beispielen nach den Figuren 4 und 5 liegt dieser Bereich aufgrund des Strömungswinkelbereichs von 180° auf der der Neigungsrichtung der Austrittsöffnung 32 entgegengesetzten Seite. Liegt aufgrund von spezifischen Geometrien des Drallelements 47 bzw. der Austrittsöffnung 32 ein Strömungswinkelbereich von ungleich 180° vor, so kommt es logischerweise zu anderen als den in den Figuren 4 und 5 dargestellten Anordnungen der Drallkanäle 93, 93a, 93b. Allgemein gilt für ein Beispiel mit ungleicher Geometrie der Drallkanäle 93a, 93b, dass die breiten Drallkanäle 93a im Drallelement 47 so liegen sollten, dass unter Berücksichtigung des Strömungswinkelbereichs ein Einströmen in die Austrittsöffnung 32 entgegengesetzt ihrer Neigungsrichtung erfolgt. Die schmaleren Drallkanäle 93b befinden sich entsprechend so, dass ein Einströmen in Neigungsrichtung der Austrittsöffnung 32 gewährleistet ist. Für Beispiele mit einer Ungleichverteilung der Drallkanäle 93 gilt, dass die Drallkanäle 93 so liegen, dass unter Berücksichtigung des Strömungswinkelbereichs ein Einströmen in die Austrittsöffnung 32 entgegengesetzt ihrer Neigungsrichtung erfolgt.

In den Figuren 6 bis 10 sind mehrere Ausführungsbeispiele von Ventilnadelenden dargestellt, die eine zweite Gruppe von erfindungsgemäßen Lösungsvorschlägen zum oben genannten Problem aufzeigen. Ebenso wie bei den Beispielen gemäß den Figuren 1 bis 3 sind die Austrittsöffnungen 32 schräg geneigt zur Ventillängsachse 8 und mit einer Eintrittsebene, deren Mittelpunkt auf der Ventillängsachse 8 liegt, versehen. Das Drallelement 47 ist jedoch im Gegensatz zu den vorherigen Beispielen gleichmäßig ohne Konturunterschiede der einzelnen Drallkanäle 93 ausgeführt.

Figur 6 zeigt ein Ausführungsbeispiel in einer Darstellung analog Figur 2, während Figur 7 einen Schnitt entlang der Linie VII-VII in Figur 6 zeigt. Aus Figur 6 ist zu entnehmen, dass das stromabwärtige Ende des Ventilschließabschnitts 28 und damit der gesamten Ventilnadel 20 über den Umfang nicht gleichmäßig ausgebildet ist. Vielmehr ist ein Kegelabschnitt 68 des Ventilschließabschnitts 28 einseitig mit einer Abflachung 69 versehen. Die Abflachung 69 befindet sich dabei ungefähr auf der Seite des Ventilschließabschnitts 28, zu der die Austrittsöffnung 32 hin geneigt ist. Stromabwärts der Linie, an der der Ventilschließabschnitt 28 die Ventilsitzfläche 27 bei geschlossenem Ventil berührt, weist die Ventilnadel 20 den Kegelabschnitt 68 auf, dessen Kegelwinkel geringfügig größer ist als der Kegelwinkel der Ventilsitzfläche 27 des Kegelabschnitts im Ventilsitzelement 26.

Durch z.B. Anschliffe werden in diesem Bereich des Kegelabschnitts 68 in verschiedenen Varianten Flächen herausgearbeitet. In den Figuren 8 bis 10 sind drei solche Varianten dargestellt, wobei die Ventilnadelspitze in Figur 8 die in Figur 6 dargestellte in einem vergrößerten Maßstab zeigt. Bei der ausgeformten Fläche in Figur 8 handelt es sich um eine schräge ebene Abflachung 69, während bei den Beispielen gemäß Figuren 9 und 10 eher von schrägen gekrümmten, konkaven Auswölbungen 69', 69" zu sprechen ist. Die Auswölbung 69" kann derart hergestellt werden, dass die Abflachung 69 bzw. Auswölbung 69' gemäß den Figuren 8 und 9 auf einem größeren Teilumfang am Kegelabschnitt 68 herausgearbeitet wird.

Die Ventilnadel 20 ist mit ihrer angeschliffenen Abflachung 69 bzw. Auswölbung 69', 69'' drehlagenmäßig der Austrittsöffnung 32 fest zugeordnet. Die Zuordnung ist dabei so, dass die Strömung, die die Austrittsöffnung 32 in ihrer Neigungsrichtung erreicht, durch einen relativ engen Spalt zwischen dem Kegelabschnitt 68 und der Ventilsitzfläche 27 behindert wird. Die Strömung, die die Austrittsöffnung 32 entgegen ihrer Neigungsrichtung erreicht, fließt aufgrund der Abflachung 69 bzw. Auswölbung 69', 69'' durch einen breiteren Spalt zwischen dem Kegelabschnitt 68 und der Ventilsitzfläche 27 hindurch und sorgt so für einen gewünschten Ausgleich der ansonsten durch die Neigung der Austrittsöffnung 32 entstehenden Ungleichverteilung im abgespritzten Hohlkegelspray.

In einer weiteren, nicht dargestellten Ausführung kann die Eintrittsebene der geneigten Austrittsöffnung 32 geringfügig von der Ventillängsachse 8 versetzt ausgebildet sein. Bei einer solchen Ausgestaltung ermöglichen dann die Merkmale der Außermittigkeit der Austrittsöffnung 32 in Kombination mit den ungleich verteilten bzw. ungleiche Geometrien aufweisenden Drallkanälen 93 oder mit den asymmetrischen Ventilnadelenden die erfindungsgemäße Lösung des oben dargestellten Problems.

Abschließend soll betont werden, dass die Erfindung nicht auf die gezeigten und beschriebenen Drallscheiben 47 als die drallerzeugenden Mittel beschränkt ist. Die drallerzeugenden Mittel umfassen auch Drallkanäle, Drallnuten und Drallbohrungen, die beispielsweise am Umfang der Ventilnadel oder in einem Düsenkörper oder in speziellen Dralleinsätzen eingebracht sind.

## Patentansprüche

1. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einem erregbaren Betätigungselement (1, 2, 19), mit einer axial entlang einer Ventillängsachse (8) bewegbaren Ventilnadel (20), die an ihrem stromabwärtigen Ende einen Ventilschließabschnitt (28) aufweist, der zum Öffnen und Schließen des Ventils mit einem festen Ventilsitz (27) zusammenwirkt, wobei der Ventilsitz (27) an einem Ventilsitzelement (26) ausgebildet ist, mit einer stromabwärts des Ventilsitzes (27) ausgebildeten Austrittsöffnung (32), die schräg geneigt zur Ventillängsachse (8) verläuft und dabei eine Neigungsrichtung aufweist, und mit stromaufwärts des Ventilsitzes (27) angeordneten drallerzeugenden Mitteln, **dadurch gekennzeichnet, dass** die drallerzeugenden Mittel als Drallkanäle (93) umfangsmäßig verteilt sind und dabei Drallkanäle (93a, 93b) mit unterschiedlichen Geometrien bzw. Abmessungen vorgesehen sind.

2. Brennstoffeinspritzventil nach Anspruch 1, **dadurch gekennzeichnet, dass** über einen Winkelbereich in Umfangsrichtung gesehen Drallkanäle (93b) ausgebildet sind, die eine geringere Breite aufweisen als die Drallkanäle (93a) des restlichen, sich zu 360° ergebenden Winkelbereichs.

3. Brennstoffeinspritzventil nach Anspruch 2, **dadurch gekennzeichnet, dass** auf der Seite der Neigungsrichtung der Austrittsöffnung (32) wenigstens ein Drallkanal (93b) geringerer Breite liegt.

4. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einem erregbaren Betätigungselement (1, 2, 19), mit einer axial entlang einer Ventillängsachse (8) bewegbaren Ventilnadel (20), die an ihrem stromabwärtigen Ende einen Ventilschließabschnitt (28) aufweist, der zum Öffnen und Schließen des Ventils mit einem festen Ventilsitz (27) zusammenwirkt, wobei der Ventilsitz (27) an einem Ventilsitzelement (26) ausgebildet ist, mit einer stromabwärts des Ventilsitzes (27) ausgebildeten Austrittsöffnung (32), die schräg geneigt zur Ventillängsachse (8) verläuft und dabei eine Neigungsrichtung aufweist, und mit stromaufwärts des Ventilsitzes (27) angeordneten drallerzeugenden Mitteln, **dadurch gekennzeichnet, dass** die drallerzeugenden Mittel als wenigstens zwei Drallkanäle (93) umfangsmäßig derart ungleich verteilt sind, dass wenigstens zwei unterschiedliche umfängliche Abstände zwischen zwei benachbarten Drallkanälen (93) vorliegen.

5. Brennstoffeinspritzventil nach Anspruch 4, **dadurch gekennzeichnet, dass** über einen Winkelbereich von ca. 180° in Umfangsrichtung gesehen Drallkanäle (93) ausgebildet sind und der restliche Winkelbereich keine Drallkanäle aufweist.

6. Brennstoffeinspritzventil nach Anspruch 4 oder 5, **dadurch gekennzeichnet, dass** auf der Seite der Neigungsrichtung der Austrittsöffnung (32) kein Drallkanal und auf der gegenüberliegenden Seite wenigstens zwei Drallkanäle (93) vorgesehen sind.

7. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einem erregbaren Betätigungselement (1, 2, 19), mit einer axial entlang einer Ventillängsachse (8) bewegbaren Ventilnadel (20), die an ihrem stromabwärtigen Ende einen Ventilschließabschnitt (28) aufweist, der zum Öffnen und Schließen des Ventils mit einem festen Ventilsitz (27) zusammenwirkt, wobei der Ventilsitz (27) an einem Ventilsitzelement (26) ausgebildet ist, mit einer stromabwärts des Ventilsitzes (27) ausgebildeten Austrittsöffnung (32), die schräg geneigt zur Ventillängsachse (8) verläuft und dabei eine Neigungsrichtung aufweist, und mit stromaufwärts des Ventilsitzes (27) angeordneten drallerzeugenden Mitteln, **dadurch gekennzeichnet, dass** der Ventilschließabschnitt (28) der Ventilnadel (20) an seinem stromabwärtigen Ende eine eine Asymmetrie erzeugende schräge Abflachung (69) bzw. Auswölbung (69', 69'') besitzt.

8. Brennstoffeinspritzventil nach Anspruch 7, **dadurch gekennzeichnet, dass** die Abflachung (69) bzw. Auswölbung (69', 69'') einseitig auf der Seite der Neigungsrichtung der Austrittsöffnung (32) ausgeformt ist.

9. Brennstoffeinspritzventil nach Anspruch 7 oder 8, **dadurch gekennzeichnet, dass** die Auswölbung (69', 69'') konkav gekrümmt ist.

10. Brennstoffeinspritzventil nach einem der Ansprüche 7 bis 9, **dadurch gekennzeichnet, dass** der Ventilschließabschnitt (28) weitgehend als Kegelabschnitt (68) kegelförmig in Strömungsrichtung spitz zuläuft.

11. Brennstoffeinspritzventil nach einem der vorhergehenden Ansprüche, **dadurch gekennzeichnet, dass** die Austrittsöffnung (32) eine Eintrittsebene besitzt, deren Mittelpunkt auf der Ventillängsachse (8) liegt.

12. Brennstoffeinspritzventil nach einem der vorhergehenden Ansprüche, **dadurch gekennzeichnet, dass** die drallerzeugenden Mittel in Form eines scheibenförmigen Drallelements (47) ausgeführt sind.

13. Brennstoffeinspritzventil nach Anspruch 12, **dadurch gekennzeichnet, dass** das Drallelement (47) unmittelbar stromaufwärts des Ventilsitzelements (26) an diesem anliegt.

## Claims

1. Fuel injection valve for the fuel injection systems of internal combustion engines, in particular for the direct injection of fuel into a combustion space of an internal combustion engine, with an excitable actuating element (1, 2, 19), with a valve needle (20) which is movable axially along a valve longitudinal axis (8) and at its downstream end has a valve-closing portion (28) which co-operates with a fixed valve seat (27) in order to open and close the valve, the valve seat (27) being formed on the valve-seat element (26), with an outlet orifice (32) which is formed downstream of the valve seat (27) and which runs at an oblique inclination to the valve longitudinal axis (8) and in this case has one direction of inclination, and with swirl-generating means arranged upstream of the valve seat (27), **characterized in that** the swirl-generating means are distributed circumferentially as swirl ducts (93), and in this case swirl ducts (93a, 93b) with different geometries or dimensions are provided.

2. Fuel injection valve according to Claim 1, **characterized in that** swirl ducts (93b) are formed over an angular sector, as seen in the circumferential direction, and have a smaller width than the swirl ducts (93a) of the remaining angular sector making up 360°.

3. Fuel injection valve according to Claim 2, **characterized in that** at least one swirl duct (93b) of smaller width lies on the side of the direction of inclination of the outlet orifice (32).

4. Fuel injection valve for fuel injection systems of internal combustion engines, in particular for the direct injection of fuel into a combustion space of an internal combustion engine, with an excitable actuating element (1, 2, 19) with a valve needle (20) which is movable axially along a valve longitudinal axis (8) and at its downstream end has a valve-closing portion (28) which co-operates with a fixed valve seat (27) in order to open and close the valve, the valve seat (27) being formed on a valve-seat element (26), with an outlet orifice (32) which is formed downstream of the valve seat (27) and which runs at an oblique inclination to the valve longitudinal axis (8) and in this case has one direction of inclination, and with swirl-generating means arranged upstream of the valve seat (27), **characterized in that** the swirl-generating means are distributed circumferentially unequally as at least two swirl ducts (93), in such a way that there are at least two different circumferential distances between two adjacent swirl ducts (93).

5. Fuel injection valve according to Claim 4, **characterized in that** swirl ducts (93) are formed over an angular sector of approximately 180°, as seen in the circumferential direction and the remaining angular sector has no swirl ducts.

6. Fuel injection valve according to Claim 4 or 5, **characterized in that** no swirl duct is provided on the side of the direction of inclination of the outlet orifice (32) and at least two swirl ducts (93) are provided on the opposite side.

7. Fuel injection valve for fuel injection systems of internal combustion engines, in particular for the direct injection of fuel into a combustion space of an internal combustion engine, with an excitable actuating element (1, 2, 19) with a valve needle (20) which is movable axially along a valve longitudinal axis (8) and at its downstream end has a valve-closing portion (28) which co-operates with a fixed valve seat (27) in order to open and close the valve, the valve seat (27) being formed on a valve-seat element (26), with an outlet orifice (32) which is formed downstream of the valve seat (27) and which runs at an oblique inclination.to the valve longitudinal axis (8) and in this case has one direction of inclination, and with swirl-generating means arranged upstream of the valve seat (27), **characterized in that** the valve-closing portion (28) of the valve needle (20) possesses, at its downstream end, an oblique flattening (69) or indentation (69', 69") generating an asymmetry.

8. Fuel injection valve according to Claim 7, **characterized in that** the flattening (69) or indentation (69', 69") is shaped out unilaterally on the side of the direction of inclination of the outlet orifice (32).

9. Fuel injection valve according to Claim 7 or 8, **characterized in that** the indentation (69', 69") is curved concavely.

10. Fuel injection valve according to one of Claims 7 to 9, **characterized in that** the valve-closing portion (28) tapers, essentially as a cone segment (68), conically in the direction of flow.

11. Fuel injection valve according to one of the preceding claims, **characterized in that** the outlet orifice (32) possesses an inlet plane, the centre point of which lies in the valve longitudinal axis (8).

12. Fuel injection valve according to one of the preceding claims, **characterized in that** the swirl-generating means are designed in the form of a disc-shaped swirl element (47).

13. Fuel injection valve according to Claim 12, **characterized in that** the swirl element (47) bears against the valve-seat element (26) directly upstream of the latter.

## Revendications

1. Soupape d'injection de carburant pour une installation d'injection de carburant d'un moteur à combustion interne, notamment pour l'injection directe de carburant dans la chambre de combustion du moteur, comportant un élément d'actionnement susceptible d'être excité (1, 2, 19), une aiguille d'injecteur (20) mobile axialement le long de l'axe (8) de la soupape et dont l'extrémité aval comporte un segment d'obturation de soupape (28) qui coopère avec un siège de soupape fixe (27) pour ouvrir et fermer la soupape,
le siège de soupape (27) étant réalisé sur un élément de siège de soupape (26), avec un orifice de sortie (32) réalisé en aval du siège de soupape (27), et incliné en biais par rapport à l'axe longitudinal de l'injecteur pour présenter ainsi une direction d'inclinaison, ainsi que des moyens en amont du siège de soupape (27) pour générer un écoulement en rotation,
**caractérisée en ce que**
les moyens générant l'écoulement en rotation sont des canaux de mise en rotation (93) répartis en périphérie et
les canaux de mise en rotation (93a, 93b) ont des géométries et des dimensions différentes.

2. Soupape d'injection de carburant selon la revendication 1,
**caractérisée en ce que**
les canaux de mise en rotation (93b) sont réalisés dans une plage angulaire, dans la direction périphérique, ces canaux ayant une largeur inférieure à celle des canaux de mise en rotation (93a) de la plage angulaire résiduelle par rapport à 360°.

3. Soupape d'injection de carburant selon la revendication 2,
**caractérisée en ce que**
du côté de la direction d'inclinaison de l'orifice de sortie (32) il y a au moins un canal de mise en rotation (93b) de largeur plus faible.

4. Soupape d'injection de carburant pour des installations d'injection de carburant de moteurs à combustion interne, notamment pour l'injection directe de carburant dans la chambre de combustion du moteur, comprenant un élément d'actionnement (1, 2, 19) susceptible d'être excité, une aiguille d'injecteur (20) mobile axialement le long de l'axe longitudinal (8) de l'injecteur et dont l'extrémité aval comporte un segment de fermeture de soupape (28) coopérant avec un siège de soupape fixe (27) pour ouvrir et fermer la soupape,
le siège de soupape (27) étant réalisé sur l'élément formant siège (26) avec un orifice de sortie (32) en aval du siège de soupape (27), cet orifice étant incliné par rapport à l'axe longitudinal de la soupape (8) et présentant une direction d'inclinaison et
des moyens prévus en amont du siège de soupape (27) pour générer une rotation,
**caractérisée en ce que**
les moyens générant une rotation sont constitués par au moins deux canaux de mise en rotation (93) répartis de façon périphérique irrégulière pour avoir au moins deux distances périphériques différentes entre deux canaux de mise en rotation (93) voisins.

5. Soupape d'injection de carburant selon la revendication 4,
**caractérisée en ce que**
dans une plage angulaire d'environ 180°, des canaux de mise en rotation (93) sont prévus dans la direction périphérique et la plage angulaire résiduelle ne comporte pas de canaux de mise en rotation.

6. Soupape d'injection de carburant selon la revendication 4 ou 5,
**caractérisée en ce que**
du côté de la direction d'inclinaison de l'orifice de sortie (32) il n'y a pas de canal de mise en rotation et sur le côté opposé il y a au moins deux canaux de mise en rotation (93).

7. Soupape d'injection de carburant pour des installations d'injection de carburant de moteurs à combustion interne, notamment pour l'injection directe de carburant dans la chambre de combustion du moteur, comprenant un élément d'actionnement (1, 2, 19) excitable, une aiguille d'injecteur (20) mobile axialement suivant l'axe longitudinal (8) de l'injecteur et dont l'extrémité aval comporte un segment d'obturation de soupape (28) qui coopère avec un siège de soupape (27) fixe pour l'ouverture et la fermeture de la soupape,
le siège de soupape (27) étant réalisé sur un élément de siège de soupape (26), ainsi qu'un orifice de sortie (32) réalisé dans la direction descendante du siège de soupape (27), cet orifice étant incliné en biais par rapport à l'axe longitudinal (8) de l'injecteur et présentant une direction d'inclinaison ainsi que des moyens générant une rotation, installés en amont du siège de soupape (27),
**caractérisée en ce que**
le segment de fermeture de soupape (28) de l'aiguille (20) comporte, à son extrémité aval, une partie aplatie en biais (69) ou une partie bombée (69', 69"), créant une asymétrie.

8. Soupape d'injection de carburant selon la revendication 7,
**caractérisée en ce que**
la partie aplatie (69) ou la partie bombée (69', 69") sont formées unilatéralement sur le côté de la direction d'inclinaison de l'orifice de sortie (32).

9. Soupape d'injection de carburant selon les revendications 7 ou 8,
**caractérisée en ce que**
la partie bombée (69', 69") est courbée de manière concave.

10. Soupape d'injection de carburant selon l'une des revendications 7 à 9,
**caractérisée en ce que**
le segment d'obturation de soupape (28) est très largement en forme de segment de cône (68) pour se terminer suivant une forme conique dont la pointe est dirigée dans la direction de l'écoulement.

11. Soupape d'injection de carburant selon l'une des revendications précédentes,
**caractérisée en ce que**
l'orifice de sortie (32) possède un plan d'entrée dont le centre est situé sur l'axe longitudinal (8) de la soupape.

12. Soupape d'injection de carburant selon l'une des revendications précédentes,
**caractérisée en ce que**
les moyens générant la rotation sont réalisés sous la forme d'un élément en plaquettes (47) créant la rotation.

13. Soupape d'injection de carburant selon la revendication 12,
**caractérisée en ce que**
l'élément de rotation (47) est appliqué directement contre l'élément de siège de soupape (26) du côté amont.
